# EUROPÄISCHE PATENTSCHRIFT

(11) **EP 3 877 236 B1**
(45) Veröffentlichungstag und Bekanntmachung des Hinweises auf die Patenterteilung: **07.12.2022**
(21) Anmeldenummer: 19790143.2
(22) Anmeldetag: 15.10.2019
(51) Int. Cl.: B61L 25/02, B61L 15/00, B61L 23/34

(54) **ANLAGE UND VERFAHREN ZUM BETREIBEN EINER ANLAGE MIT SCHIENE, STATIONÄRER EINHEIT, SCHIENENGEFÜHRTEN MOBILTEILEN UND SCHLITZHOHLWELLENLEITER**
APPARATUS AND METHOD FOR OPERATING AN APPARATUS HAVING A RAIL, A STATIONARY UNIT, RAIL-GUIDED MOBILE PARTS AND A SLOTTED HOLLOW SHAFT CONDUCTOR
INSTALLATION ET PROCÉDÉ SERVANT À FAIRE FONCTIONNER UNE INSTALLATION COMPRENANT UN RAIL, UNE UNITÉ STATIONNAIRE, DES PARTIES MOBILES GUIDÉES SUR RAILS ET GUIDE D'ONDE CREUX ENTAILLÉ

(30) Priorität: 07.11.2018 DE 102018008732
(43) Veröffentlichungstag der Anmeldung: 15.09.2021
(73) Patentinhaber: SEW-EURODRIVE GmbH & Co. KG, 76646 Bruchsal (DE)
(72) Erfinder: HUA, Zhidong, 76646 Bruchsal (DE); BÜRGEL, Jonas Felix, 76185 Karlsruhe (DE); LINDENFELSER, Michael, 76646 Bruchsal (DE); WANJEK, Andre-Thomas, 76689 Karlsdorf-Neuthard (DE); SCHMIDT, Josef, 76676 Graben-Neudorf (DE)
(86) Internationale Anmeldenummer: PCT/EP2019/025346
(87) Internationale Veröffentlichungsnummer: WO 2020/094250

(56) Entgegenhaltungen:
- DE-A1-102012 006 413
- DE-A1-102017 009 076
- US-A1- 2003 010 872

## Beschreibung

Die Erfindung betrifft eine Anlage und ein Verfahren zum Betreiben einer Anlage mit Schiene, stationärer Einheit, schienengeführten Mobilteilen und Schlitzhohlwellenleiter.

Es ist allgemein bekannt, dass Mobilteile schienengeführt verfahrbar sind.

Aus der DE 31 17 655 A1 ist eine Einrichtung zur Abstandssicherung von spurgebundenen Fahrzeugen.

Aus der DE 10 2012 006 413 A1 ist als nächstliegender Stand der Technik ein Transportsystem bekannt.

Aus der DE 10 2017 009 076 A1 ist ein Schienensystem, aufweisend ein Fahrzeug und ein Schienenteil, bekannt.

Aus der US 2003/010872 A1 ist ein Kommunikationssystem bei einer Schienenanlage bekannt.

Der Erfindung liegt daher die Aufgabe zugrunde, eine Anlage weiterzubilden, wobei die Sicherheit in einfacher Weise erhöhbar ist.

Erfindungsgemäß wird die Aufgabe bei der Anlage nach den in Anspruch 1 angegebenen Merkmalen gelöst.

Wichtige Merkmale der Erfindung bei der Anlage mit Schiene, stationärer Einheit, schienengeführten Mobilteilen und Schlitzhohlwellenleiter sind, dass entweder ein erstes der Mobilteile oder die stationäre Einheit als Sender fungiert,
wobei ein zweites der Mobilteile als Empfänger fungiert,
wobei der Sender geeignet ausgeführt ist zum gleichzeitigen Sende eines elektromagnetischen Signals SE und eines akustischen Signals SA, insbesondere zum Zeitpunkt t0,
wobei der vom Sender beabstandete Empfänger geeignet ausgeführt ist zum Detektieren des Eintreffens des elektromagnetischen Signals SE zum Zeitpunkt t1 und zum Detektieren des Eintreffens des akustischen Signals SA zum Zeitpunkt t2,
wobei das zweite Mobilteil eine Auswerteeinheit aufweist, welche geeignet ausgeführt oder ausgebildet ist, den Abstand zwischen Sender und Empfänger aus den erfassten Zeitpunkten t1 und t2 zu bestimmen.

Von Vorteil ist dabei, dass der Abstand in einfacher und kostengünstiger Weise bestimmbar ist und somit Kollisionen - beispielsweise zwischen zwei Mobilteilen - vermeidbar sind. Da zur Datenübertragung elektromagnetische Wellen in den Hohlraum des Schlitzhohlleiters eingekoppelt werden und empfängerseitig ausgekoppelt werden, ist zur Abstandsbestimmung zusätzlich nur eine Kopplungseinheit für Schallwellen, insbesondere akustische Wellen, senderseitig und empfängerseitig notwendig. Die Kopplungseinheit ist bevorzugt als Ultraschallwandler ausführbar. Somit ist der Schall ebenso wie die elektromagnetische Welle innerhalb des Hohlraums ausbreitbar und die Amplitude nimmt jeweils viel weniger ab als bei Ausbreitung im freien Raum.

Durch das gleichzeitige, also zueinander synchronisierte, Aussenden der elektromagnetischen Wellen und der Schallwellen, ist die Abstandsbestimmung in einfacher Weise ausführbar, nämlich durch bloßes Bestimmen der Zeitdifferenz des empfängerseitigen Eintreffens der Signale und entsprechendes Auswerten dieser Zeitdifferenz.

Bei einer vorteilhaften Ausgestaltung ist die Auswerteeinheit ausgebildet, den Abstand zwischen Sender und Empfänger zu bestimmen gemäß S = (t2 - t1) / (1/v - 1/c), wobei v die Schallgeschwindigkeit und c die Lichtgeschwindigkeit ist. Von Vorteil ist dabei, dass eine sehr genaue Abstandsbestimmung ermöglicht ist.

Bei einer vorteilhaften Ausgestaltung ist die Auswerteeinheit ausgebildet, den Abstand zwischen Sender und Empfänger zu bestimmen gemäß S = (t2 - t1) * v, wobei v die Schallgeschwindigkeit ist. Von Vorteil ist dabei, dass der Abstand sehr einfach und schnell bestimmbar ist, insbesondere in sehr guter Näherung, da die Lichtgeschwindigkeit viel größer ist als die Schallgeschwindigkeit.

Bei einer vorteilhaften Ausgestaltung überdeckt der Hohlraum des Schlitzhohlwellenleiters in einer ersten Querrichtung zur Schienenrichtung einen größeren Bereich als der Schlitz des Schlitzhohlwellenleiters,

insbesondere wobei die erste Querrichtung senkrecht ausgerichtet ist zu einer zweiten Querrichtung, welche mittig durch den Schlitz geht. Von Vorteil ist dabei, dass in der ersten Querrichtung gesehen der Hohlraum seitlich ausgedehnt ist und somit dort stationäre Komponenten aufnehmbar sind, welche ein Durchfahren der Schiene mittels des Mobilteils nicht blockieren. Als Komponenten sind insbesondere eine Antenne und eine Kopplungseinheit für Schall anordenbar, welche verbunden sind mit elektronischen Baugruppen der stationären Einheit.

Bei einer vorteilhaften Ausgestaltung ist eine Antenne der stationären Einheit in der ersten Querrichtung beabstandet vom Schlitz,
insbesondere in einem ersten Hinterschnitt, insbesondere Hintergriff, des Hohlraums angeordnet ist,
   und/oder
eine für Schallwellen geeignete Kopplungsvorrichtung der stationären Einheit entgegen der ersten Querrichtung beabstandet ist vom Schlitz,
insbesondere in einem zweiten Hinterschnitt, insbesondere Hintergriff, des Hohlraums angeordnet ist, insbesondere wobei der zweite Hinterschnitt vom ersten beabstandet ist. Von Vorteil ist dabei, dass keine Kollision mit dem Mobilteil oder dessen Antenne oder Kopplungseinrichtung auftritt beim schienengeführten Entlangfahren des Mobilteils.

Bei einer vorteilhaften Ausgestaltung weist das oder jedes Mobilteil eine Antenne und eine für Schallwellen geeignete Kopplungsvorrichtung auf,
wobei sowohl der von der Antenne in der ersten Querrichtung überdeckte Bereich als auch der von der Kopplungsvorrichtung in der ersten Querrichtung überdeckte Bereich enthalten sind in dem von dem Schlitz in der ersten Querrichtung überdeckten Bereich,
insbesondere wobei die Antenne in den Hohlraum des Schlitzhohlwellenleiters hineinragt oder in dem Hohlraum angeordnet ist,
insbesondere wobei die Kopplungsvorrichtung in den Hohlraum des Schlitzhohlwellenleiters hineinragt oder in dem Hohlraum angeordnet ist. Von Vorteil ist dabei, dass das Mobilteil Datenübertragung und Abstandsbestimmung gleichzeitig ausführt.

Bei einer vorteilhaften Ausgestaltung ist der Schlitzhohlwellenleiter als Aluminiumstranggussprofilteil ausgeführt. Von Vorteil ist dabei, dass eine einfache Herstellung ermöglicht ist.

Bei einer vorteilhaften Ausgestaltung weist der Schlitzhohlwellenleiter als Berandung des Schlitzes einen beidseitig des Schlitzes zum Mobilteil hervorstehenden Steg oder Kragenbereich auf,
insbesondere durch welchen die Antenne und die Kopplungsvorrichtung des Mobilteils hindurchragen oder durch welchen eine einstückig oder mehrstückig ausgeführte Haltevorrichtung für die Antenne und die Kopplungsvorrichtung hindurchragt. Von Vorteil ist dabei, dass ein Austreten von Hohlwellen, also den elektromagnetischen sich im Hohlraum des Schlitzhohlleiters ausbreitenden Wellen verringert ist, da die beidseitig des Schlitzes sich erhebenden Stege als großer Widerstand gegen die Ausbreitung der Wellen fungieren.

Insbesondere ist die Frequenz der elektromagnetischen Wellen derart gewählt, dass zwar eine Schwingungsmode des Hohlraums anregbar ist, nicht aber eine Schwingungsmode des Schlitzes. Hierzu ist die Schlitzweite derart gewählt, dass sie keinem ganzzahligen Vielfachen oder einem ganzzahligen Anteil der Breite oder Höhe des Hohlraums entspricht.

Bei einer vorteilhaften Ausgestaltung ist die Antenne elektrisch mit einem Transceiver verbunden, welcher mit einem Modem verbunden ist,
wobei die Kopplungsvorrichtung mit einem Transceiver verbunden ist, der mit dem Modem verbunden ist, dass mit der Auswerteeinheit verbunden ist. Von Vorteil ist dabei, dass eine bidirektionale Datenübertragung ermöglicht ist, insbesondere eine Identifikationsinformation elektromagnetisch und/oder mittels des Schalls übermittelbar ist. Somit sind die bestimmten Abstände zum jeweiligen Mobilteil eindeutig bestimmbar. Das heißt insbesondere, dass das jeweils detektierte Schallsignal eindeutig dem jeweiligen elektromagnetischen Signal zuordenbar ist.

Wichtige Merkmale bei dem Verfahren zum Betreiben einer Anlage mit Schiene, stationärer Einheit, schienengeführten Mobilteilen und Schlitzhohlwellenleiter, sind, dass entweder ein erstes der Mobilteile oder die stationäre Einheit als Sender fungiert,
wobei ein zweites der Mobilteile als Empfänger fungiert,
wobei zum Zeitpunkt t0 der Sender ein elektromagnetisches Signal und ein akustisches Signal gleichzeitig zu senden beginnt,
wobei der Empfänger den Zeitpunkt t1 des Eintreffens des elektromagnetischen Signals SE bestimmt und den Zeitpunkt t2 des akustischen Signals SA bestimmt,
wobei, insbesondere mittels einer Auswerteeinheit des zweiten Mobilteils, der Abstand zwischen Sender und Empfänger bestimmt wird. Von Vorteil ist dabei, dass eine Abstandsbestimmung in einfacher Weise ermöglicht ist und somit eine Kollision zweiter Mobilteil verhinderbar ist, indem bei Unterschreiten eines Schwellwertes, also einem zu geringen Abstand, ein Abbremsen oder Anhalten der Mobilteile insbesondere durch die Auswerteeinheit 29 bewirkt wird. Somit ist die Sicherheit erhöht. Alternativ ist auch ein Bewegen der Mobilteile mit einem vorgegebenen Abstand ausführbar. Hierzu weist die Auswerteeinheit 29 des Mobilteils einen Regler auf, der die Geschwindigkeit des Fahrzeugs derart stellt, dass der jeweils bestimmte Abstand auf den vorgegebenen Sollwert für Abstand hin regelt. Der Sollwert ist vorteiligerweise auch geschwindigkeitsabhängig wählbar. Wenn also der gleitende Mittelwert der Geschwindigkeit des Mobilteils anwächst, wächst auch der Sollwert an, insbesondere proportional zum Quadrat des Mittelwerts. Somit ist im Sicherheitsfall noch ausreichend Bremsweg vorhanden.

Besonders vorteilhaft ist also, dass der Sollwert proportional zum Quadrat des gleitenden Mittelwerts der erfassten Geschwindigkeit vorgegeben wird. Statt des gleitenden Mittelwerts ist auch ein tiefpassgefilterter Wert der erfassten Geschwindigkeit verwendbar.

Weitere Vorteile ergeben sich aus den Unteransprüchen.

Die Erfindung wird nun anhand von schematischen Abbildungen näher erläutert:

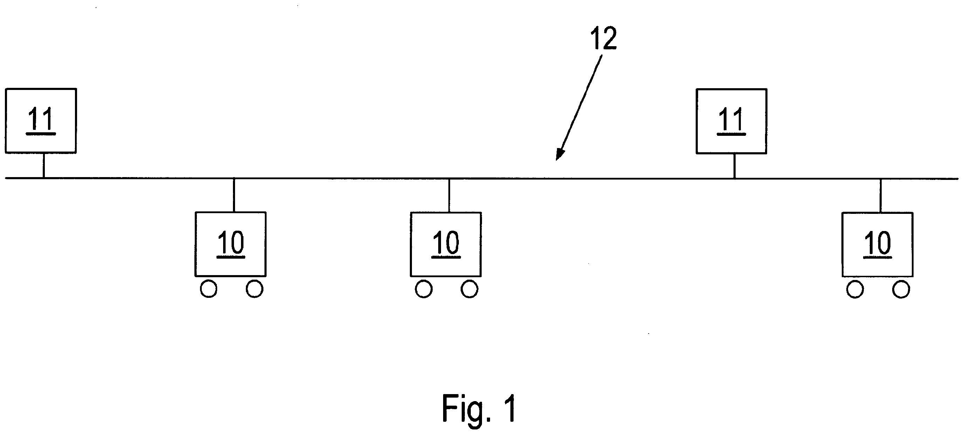

In der Figur 1 ist die Datenübertragung zwischen einer stationären Einheit 11 und als Schienenfahrzeuge fungierende Mobilteilen 10 schematisch dargestellt.

In der Figur 2 ist eine Kopplungseinheit 29 der stationären Einheit 11 schematisch skizziert, wobei die Kopplungseinheit 30 eines ersten der Mobilteile 10 und der als Übertragungskanal 12 fungierende Schlitzhohlleiter 21 schematisch in Schrägansicht dargestellt sind.

In der Figur 3 ist im Unterschied zur Figur 2 statt der stationären Einheit 11 die Hohlwellenkopplungseinheit 30 eines zweiten der Mobilteile 10 schematisch skizziert.

In der Figur 4 sind die Signalverläufe einer als Sender fungierenden Einheit 11 oder eines als Sender fungierenden Mobilteils 10 dargestellt.

In der Figur 5 sind die Signalverläufe einer als Empfänger fungierenden Einheit 11 oder eines als Sender fungierenden Mobilteils 10 dargestellt.

Wie in den Figuren dargestellt, weist die erfindungsgemäße Anlage einen als Übertragungskanal 12 fungierenden Schlitzhohlleiter 21 auf.

Die Mobilteile 10 sind als Schienenfahrzeug, insbesondere für eine Einschienenhängebahn, ausgeführt. Wobei der Schlitzhohlleiter 21 parallel zu einer Schiene in der Anlage verlegt ist, insbesondere einstückig mit der Schiene ausgeführt ist.

Dabei ist der Schlitzhohlleiter 21 als Aluminiumstranggussprofil ausgeführt. Dabei weist der Schlitzhohlleiter einen Hohlraum auf, dessen Breite quer zur Schienenrichtung, insbesondere quer zur Schlitzrichtung, also quer zur Ziehrichtung des Stranggussprofils größer ist als die Schlitzweite des Schlitzes des Schlitzhohlwellenleiters 21.

Durch die breitere Ausführung des Hohlraums quer zur Schienenrichtung entsteht ein Hinterschnitt, in welchem auf der ersten Seite eine Antenne 22 der stationären Einheit 11 anordenbar ist und auf der anderen Seite eine Kopplungsvorrichtung 24 für Schallwellen, insbesondere Ultraschallsender.

Der vom Schlitz in dieser Querrichtung überdeckte Bereich ist also zwischen dem von der Antenne 22 überdeckten Bereich und dem von der Kopplungsvorrichtung 24 überdeckten Bereich angeordnet.

Die Antenne 22 ist mit einem Transceiver 23 verbunden, so dass Daten sendbar oder empfangbar ist. Der Transceiver 23 ist mit einem Modem 27 für Datenübertragung und Identifizierung empfangener Datentelegramme verbunden, dass mit einer Auswerteeinheit 28 verbunden ist.

Somit sind elektromagnetische Wellen mittels der Antenne 22 empfangbar und die empfangenen Signale auswertbar.

Ebenso ist die Kopplungsvorrichtung 24 für Schallwellen mit einem Transceiver 25 verbunden, welcher über eine Filter- und Signalverstärker-einheit 26 mit dem Modem 27 verbunden ist.

Somit ist die Kopplungseinheit 29 der stationären Einheit 11 derart betreibbar, dass ein Schallsignal und ein elektromagnetisches Signal gleichzeitig abstrahlbar sind, insbesondere von der Antenne 22 beziehungsweise von der Kopplungseinheit 24.

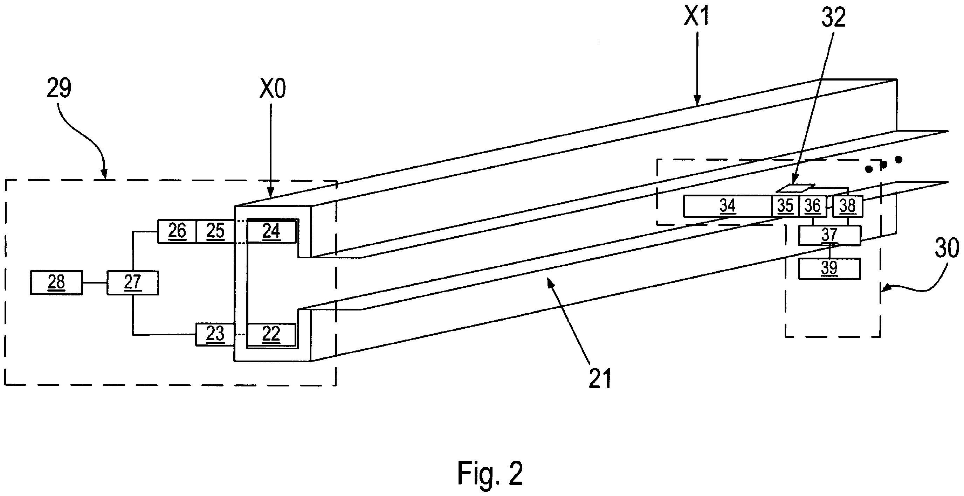

Wie in Figur 2 gezeigt, weist das Mobilteil 10 eine Kopplungseinheit 30 auf, deren Antenne 32 zum Empfang der von der stationären Einheit 11, insbesondere deren Antenne 22, gesendeten im Hohlraum des Schlitzhohlwellenleiters 21 sich ausbreiteten Welle geeignet ausgeführt ist. Die von der Antenne 32 empfangenen Signale werden einem Transceiver 38 zugeführt, der über ein Modem 37 mit einer Auswerteeinheit 38 des Mobilteils 10 verbunden ist.

Wie auch die Antenne 32 ist ebenso eine Kopplungsvorrichtung 34 für Schallwellen mit einem Transceiver 35 verbunden, der über eine Filter- und Signalverstärker-einheit 36 mit dem Modem 37 für Datenübertragung und Identifizierung empfangener Datentelegramme mit der Auswerteeinheit 39 verbunden ist.

Somit sind die von der stationären Einheit 11 ausgesandten Signale empfangbar von dem Mobilteil 10, wobei die Schallwelle zu einem späteren Zeitpunkt detektiert wird als die elektromagnetische Welle.

Aus dieser so erfassten Zeitdifferenz bestimmt wird in der Auswerteeinheit 39 der Abstand zwischen stationärer Einheit 11 und Mobilteil 10 bestimmt.

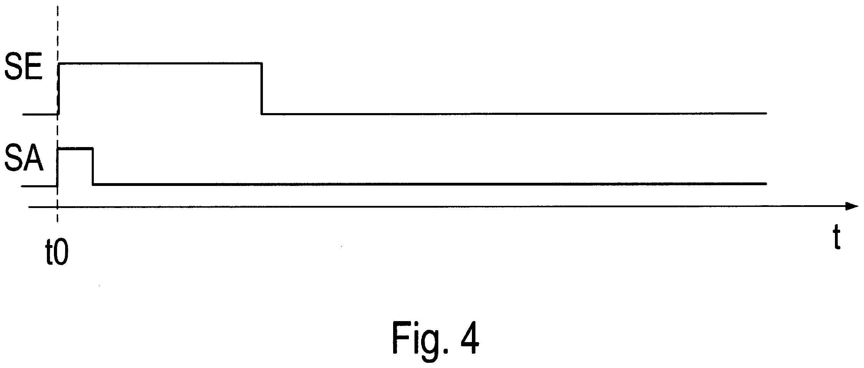

Wie in Figur 4 dargestellt, wird von der stationären Einheit das elektromagnetische Signal SE und das akustische Signal SA, also Schallsignal, zum Zeitpunkt t0 gleichzeitig abgestrahlt, wobei das elektromagnetische Signal SE moduliert wird und somit auch zur Datenübertragung verwendet wird.

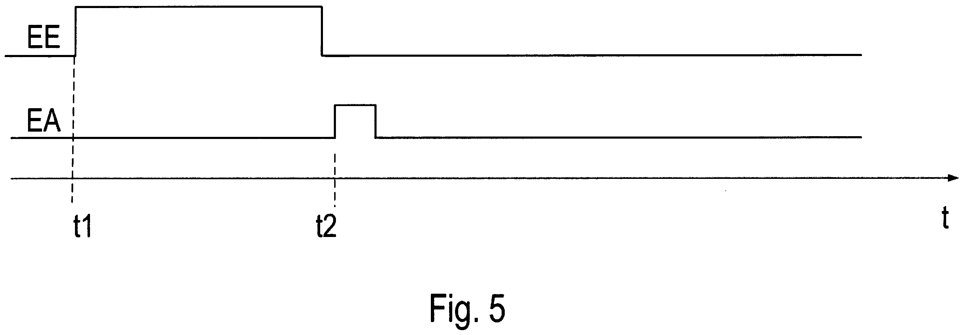

Wie in Figur 5 dargestellt, wird das elektromagnetische Signal SE vom Mobilteil 10 zum Zeitpunkt t1 detektiert und daran anschließend die übertragenen Daten. Das akustische Signal SA wird erst zum späteren Zeitpunkt t2 detektiert.

Aus der Differenz dieser beiden Zeiten wird die Entfernung S zwischen stationärer Einheit 11 und Mobilteil 10 bestimmt gemäß S = (t2 -t1) / (1/v - 1/c), wobei v die Schallgeschwindigkeit und c die Lichtgeschwindigkeit ist.

Bei weiteren erfindungsgemäßen Ausführungsbeispielen wird die Entfernung S genähert bestimmt gemäß S = (t2 - t1) * v.

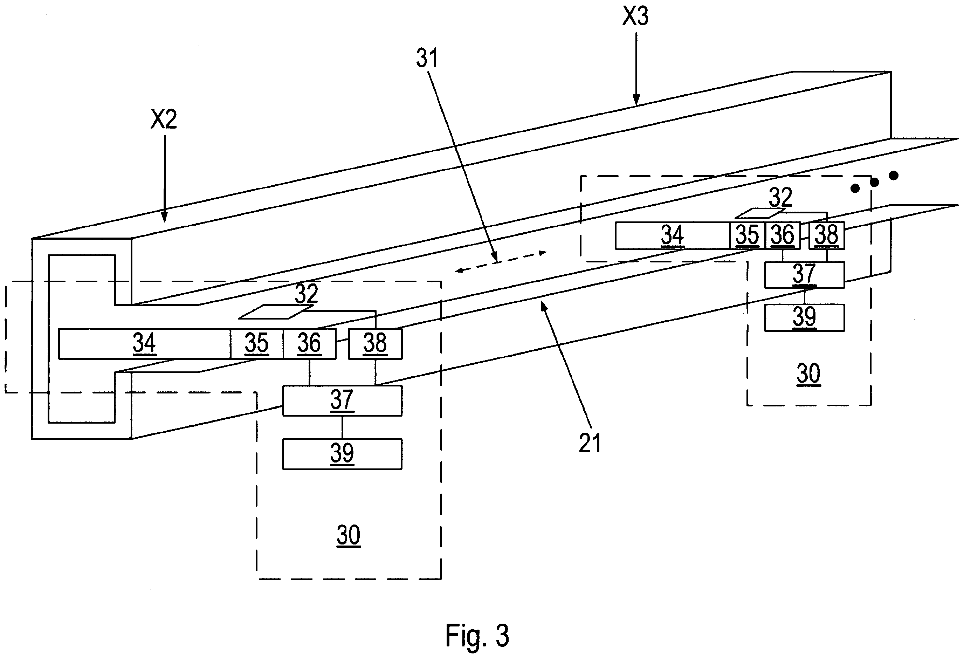

Wie in Figur 3 gezeigt, ist auch eine Bestimmung der Entfernung zwischen zwei Mobilteilen ausführbar. Hierbei sendet ein erstes der Mobilteile 10 das elektromagnetische Signal SE und das Schallsignal SA zum Zeitpunkt t0 gleichzeitig aus und die Auswerteeinheit des zweiten Mobilteils 10

### Bezugszeichenliste

10 Mobilteil
11 stationäre Einheit
12 Übertragungskanal
21 Schlitzhohlleiter
22 Antenne
23 Transceiver für elektromagnetische Wellen
24 Kopplungsvorrichtung für Schallwellen
25 akustischer Transceiver
26 Filter- und Signalverstärker-einheit
27 Modem für Datenübertragung und Identifizierung empfangener Datentelegramme
28 Auswerteeinheit
29 Kopplungseinheit
30 Kopplungseinheit
31 Ausbreitungsrichtungen für Schall und elektromagnetische Wellen
32 Antenne
34 Kopplungsvorrichtung für Schallwellen
35 Transceiver
36 Filter. und Signalverstärker-einheit
37 Modem für Datenübertragung und Identifizierung empfangener Datentelegramme
38 Transceiver
39 Auswerteeinheit
X0 Referenzposition der stationären Einheit 11
X1 erste Position, insbesondere eines ersten Mobilteils
X2 zweite Position, insbesondere eines zweiten Mobilteils

## Patentansprüche

1. Anlage mit Schiene, stationärer Einheit, schienengeführten Mobilteilen und
Schlitzhohlwellenleiter,
**dadurch gekennzeichnet, dass**
entweder ein erstes der Mobilteile oder die stationäre Einheit als Sender fungiert,
wobei ein zweites der Mobilteile als Empfänger fungiert,
wobei der Sender geeignet ausgeführt ist zum gleichzeitigen Senden eines elektromagnetischen Signals SE und eines akustischen Signals SA, insbesondere zum Zeitpunkt t0,
wobei der vom Sender beabstandete Empfänger geeignet ausgeführt ist zum Detektieren des Eintreffens des elektromagnetischen Signals SE zum Zeitpunkt t1 und zum Detektieren des Eintreffens des akustischen Signals SA zum Zeitpunkt t2,
wobei das zweite Mobilteil eine Auswerteeinheit aufweist, welche geeignet ausgeführt oder ausgebildet ist, den Abstand zwischen Sender und Empfänger aus den erfassten Zeitpunkten t1 und t2 zu bestimmen.

2. Anlage nach Anspruch 1,
**dadurch gekennzeichnet, dass**
die Auswerteeinheit ausgebildet ist, den Abstand zwischen Sender und Empfänger zu bestimmen gemäß S = (t2 - t1) / (1/v - 1/c), wobei v die Schallgeschwindigkeit und c die Lichtgeschwindigkeit ist.

3. Anlage nach Anspruch 1,
**dadurch gekennzeichnet, dass**
die Auswerteeinheit ausgebildet ist, den Abstand zwischen Sender und Empfänger zu bestimmen gemäß S = (t2 - t1) * v, wobei v die Schallgeschwindigkeit ist.

4. Anlage nach einem der vorangegangenen Ansprüche,
**dadurch gekennzeichnet, dass**
der Hohlraum des Schlitzhohlwellenleiters in einer ersten Querrichtung zur Schienenrichtung einen größeren Bereich überdeckt als der Schlitz des Schlitzhohlwellenleiters,
insbesondere wobei die erste Querrichtung senkrecht ausgerichtet ist zu einer zweiten Querrichtung, welche mittig durch den Schlitz geht.

5. Anlage nach einem der vorangegangenen Ansprüche,
**dadurch gekennzeichnet, dass**
eine Antenne der stationären Einheit in der ersten Querrichtung beabstandet ist vom Schlitz,
insbesondere in einem ersten Hinterschnitt, insbesondere Hintergriff, des Hohlraums angeordnet ist,
und/oder
eine für Schallwellen geeignete Kopplungsvorrichtung der stationären Einheit entgegen der ersten Querrichtung beabstandet ist vom Schlitz,
insbesondere in einem zweiten Hinterschnitt, insbesondere Hintergriff, des Hohlraums angeordnet ist, insbesondere wobei der zweite Hinterschnitt vom ersten beabstandet ist.

6. Anlage nach einem der vorangegangenen Ansprüche,
**dadurch gekennzeichnet, dass**
das oder jedes Mobilteil eine Antenne und eine für Schallwellen geeignete Kopplungsvorrichtung aufweist,
wobei sowohl der von der Antenne in der ersten Querrichtung überdeckte Bereich als auch der von der Kopplungsvorrichtung in der ersten Querrichtung überdeckte Bereich enthalten sind in dem von dem Schlitz in der ersten Querrichtung überdeckten Bereich,
insbesondere wobei die Antenne in den Hohlraum des Schlitzhohlwellenleiters hineinragt oder in dem Hohlraum angeordnet ist,
insbesondere wobei die Kopplungsvorrichtung in den Hohlraum des Schlitzhohlwellenleiters hineinragt oder in dem Hohlraum angeordnet ist.

7. Anlage nach einem der vorangegangenen Ansprüche,
**dadurch gekennzeichnet, dass**
der Schlitzhohlwellenleiter als Aluminiumstranggussprofilteil ausgeführt ist.

8. Anlage nach einem der vorangegangenen Ansprüche,
**dadurch gekennzeichnet, dass**
der Schlitzhohlwellenleiter als Berandung des Schlitzes einen beidseitig des Schlitzes zum Mobilteil hervorstehenden Steg oder Kragenbereich aufweist,
insbesondere durch welchen die Antenne und die Kopplungsvorrichtung des Mobilteils hindurchragen oder durch welchen eine einstückig oder mehrstückig ausgeführte Haltevorrichtung für die Antenne und die Kopplungsvorrichtung hindurchragt.

9. Anlage nach einem der vorangegangenen Ansprüche,
**dadurch gekennzeichnet, dass**
die Antenne elektrisch mit einem Transceiver verbunden ist, welcher mit einem Modem verbunden ist,
wobei die Kopplungsvorrichtung mit einem Transceiver verbunden ist, der mit dem Modem verbunden ist, dass mit der Auswerteeinheit verbunden ist.

10. Verfahren zum Betreiben einer Anlage mit Schiene, stationärer Einheit, schienengeführten Mobilteilen und Schlitzhohlwellenleiter,
**dadurch gekennzeichnet, dass**
entweder ein erstes der Mobilteile oder die stationäre Einheit als Sender fungiert,
wobei ein zweites der Mobilteile als Empfänger fungiert,
wobei zum Zeitpunkt t0 der Sender ein elektromagnetisches Signal und ein akustisches Signal gleichzeitig zu senden beginnt,
wobei der Empfänger den Zeitpunkt t1 des Eintreffens des elektromagnetischen Signals SE bestimmt und den Zeitpunkt t2 des akustischen Signals SA bestimmt,
wobei, insbesondere mittels einer Auswerteeinheit des zweiten Mobilteils, der Abstand zwischen Sender und Empfänger bestimmt wird.

11. Verfahren nach einem der vorangegangenen Ansprüche,
**dadurch gekennzeichnet, dass**
der jeweils bestimmte Abstand auf einen vorgegebenen Sollwert für Abstand hin geregelt wird, indem die Geschwindigkeit des Mobilteils entsprechend gestellt wird,
wobei der Sollwert proportional zum Quadrat des gleitenden Mittelwerts der erfassten Geschwindigkeit vorgegeben wird oder proportional zum tiefpassgefilterten Wert der erfassten Geschwindigkeit.

## Claims

1. An installation having a rail, a stationary unit, rail-guided mobile parts and a slotted hollow waveguide,
**characterised in that**
either a first of the mobile parts or the stationary unit acts as a transmitter,
wherein a second of the mobile parts acts as a receiver,
wherein the transmitter is configured to be able to simultaneously transmit an electromagnetic signal SE and an acoustic signal SA, in particular at the point in time t0,
wherein the receiver spaced apart from the transmitter is configured to be able to detect the arrival of the electromagnetic signal SE at the point in time t1 and to detect the arrival of the acoustic signal SA at the point in time t2,
wherein the second mobile part has an evaluation unit which is configured or constructed to be able to determine the spacing between transmitter and receiver from the acquired points in time t1 and t2.

2. An installation according to claim 1,
**characterised in that**
the evaluation unit is designed to determine the spacing between transmitter and receiver according to S = (t2 - t1) / (1/v - 1/c), wherein v is the speed of sound and c is the speed of air.

3. An installation according to claim 1,
**characterised in that**
the evaluation unit is constructed to determine the spacing between transmitter and receiver according to S = (t2 - t1) ^{∗} v, wherein v is the speed of sound.

4. An installation according to any one of the preceding claims,
**characterised in that**
in a first transverse direction to the rail direction, the cavity of the slotted hollow waveguide covers a larger region than the slot of the slotted hollow waveguide,
in particular wherein the first transverse direction is oriented perpendicularly to a second transverse direction which passes centrally through the slot.

5. An installation according to any one of the preceding claims,
**characterised in that**
an antenna of the stationary unit is spaced apart from the slot in the first transverse direction, in particular is arranged in a first undercut, in particular rear grip, of the cavity,
and/or
a coupling device, suitable for sound waves, of the stationary unit is spaced apart from the slot, counter to the first transverse direction,
in particular is arranged in a second undercut, in particular rear grip, of the cavity, in particular wherein the second undercut is spaced apart from the first.

6. An installation according to any one of the preceding claims,
**characterised in that**
the or each mobile part has an antenna and a coupling device suitable for sound waves, wherein both the region covered by the antenna in the first transverse direction as well as the region covered by the coupling device in the first transverse direction are contained in the region covered by the slot in the first transverse direction,
in particular wherein the antenna projects into the cavity of the slotted hollow waveguide or is arranged in the cavity,
in particular wherein the coupling device projects into the cavity of the slotted hollow waveguide or is arranged in the cavity.

7. An installation according to any one of the preceding claims,
**characterised in that**
the slotted hollow waveguide is in the form of an aluminum continuously cast shaped part.

8. An installation according to any one of the preceding claims,
**characterised in that**
as an edging of the slot, the slotted hollow waveguide has a web or collar region projecting at both sides of the slot towards the mobile part,
in particular through which the antenna and the coupling device of the mobile part project or through which there projects a one-part or multi-part holding device for the antenna and the coupling device.

9. An installation according to any one of the preceding claims,
**characterised in that**
the antenna is electrically connected to a transceiver which is connected to a modem,
wherein the coupling device is connected to a transceiver which is connected to the modem which is connected to the evaluation unit.

10. A method of operating an installation with a rail, a stationary unit, rail-guided mobile parts and a slotted hollow waveguide,
**characterised in that**
either a first of the mobile parts or the stationary unit acts as a transmitter,
wherein a second of the mobile parts acts as a receiver,
wherein at the point in time t0, the transmitter begins to simultaneously transmit an electromagnetic signal and an acoustic signal,
wherein the receiver determines the point in time t1 of the arrival of the electromagnetic signal SE and the point in time t2 of the acoustic signal SA,
wherein, in particular by means of an evaluation unit of the second mobile part, the spacing between transmitter and receiver is determined.

11. A method according to any one of the preceding claims,
**characterised in that**
the spacing determined in each case is regulated to a predetermined set point for spacing **in that** the velocity of the mobile part is set accordingly,
wherein the set point is predetermined proportionally to the square of the sliding average of the acquired velocity or proportionally to the low-pass filtered value of the acquired velocity.

## Revendications

1. Installation comprenant un rail, une unité fixe, des parties mobiles guidées sur rail et un guide d'ondes creux à fente,
**caractérisée en ce que**
soit une première des parties mobiles, soit l'unité fixe, fonctionne comme émetteur,
une deuxième des parties mobiles fonctionnant comme récepteur,
l'émetteur étant réalisé de manière appropriée pour émettre simultanément un signal électromagnétique SE et un signal acoustique SA, en particulier à l'instant t0,
le récepteur espacé de l'émetteur étant réalisé de manière appropriée pour détecter l'arrivée du signal électromagnétique SE à l'instant t1 et pour détecter l'arrivée du signal acoustique SA à l'instant t2,
la deuxième partie mobile présentant une unité d'évaluation qui est réalisée ou formée de manière appropriée pour déterminer la distance entre l'émetteur et le récepteur à partir des instants t1 et t2 détectés.

2. Installation selon la revendication 1,
**caractérisée en ce que**
l'unité d'évaluation est réalisée pour déterminer la distance entre l'émetteur et le récepteur selon S = (t2 - t1) / (1/v - 1/c), où v est la vitesse du son et c la vitesse de la lumière.

3. Installation selon la revendication 1,
**caractérisée en ce que**
l'unité d'évaluation est réalisée pour déterminer la distance entre l'émetteur et le récepteur selon S = (t2 - t1) * v, où v est la vitesse du son.

4. Installation selon l'une des revendications précédentes,
**caractérisée en ce que**
la cavité du guide d'ondes creux à fente couvre une zone plus grande que la fente du guide d'ondes creux à fente dans une première direction transversale à la direction du rail,
en particulier la première direction transversale étant orientée perpendiculairement à une deuxième direction transversale qui passe par le milieu de la fente.

5. Installation selon l'une des revendications précédentes,
**caractérisée en ce que**
une antenne de l'unité fixe est espacée de la fente dans la première direction transversale,
en particulier est disposée dans une première contre-dépouille, en particulier une prise arrière, de la cavité,
et/ou
un dispositif de couplage de l'unité fixe approprié aux ondes sonores est espacé de la fente à l'encontre de la première direction transversale,
en particulier est disposé dans une deuxième contre-dépouille, en particulier une prise arrière, de la cavité, en particulier la deuxième contre-dépouille étant espacée de la première.

6. Installation selon l'une des revendications précédentes,
**caractérisée en ce que**
la ou chaque partie mobile présente une antenne et un dispositif de couplage approprié aux ondes sonores,
à la fois la zone couverte par l'antenne dans la première direction transversale et la zone couverte par le dispositif de couplage dans la première direction transversale étant contenues dans la zone couverte par la fente dans la première direction transversale,
en particulier l'antenne faisant saillie dans la cavité du guide d'ondes creux à fente ou étant disposée dans la cavité,
en particulier le dispositif de couplage faisant saillie dans la cavité du guide d'ondes creux à fente ou étant disposé dans la cavité.

7. Installation selon l'une des revendications précédentes,
**caractérisée en ce que**
le guide d'ondes creux à fente est réalisé sous la forme d'un élément profilé en aluminium coulé en continu.

8. Installation selon l'une des revendications précédentes,
**caractérisée en ce que**
le guide d'ondes creux à fente présente, comme bordure de la fente, une nervure ou une zone formant collerette faisant saillie des deux côtés de la fente vers la partie mobile,
en particulier à travers laquelle l'antenne et le dispositif de couplage de la partie mobile font saillie ou à travers laquelle un dispositif de maintien pour l'antenne et le dispositif de couplage, réalisé en une ou plusieurs pièces, fait saillie.

9. Installation selon l'une des revendications précédentes,
**caractérisée en ce que**
l'antenne est reliée électriquement à un émetteur-récepteur qui est relié à un modem,
le dispositif de couplage étant relié à un émetteur-récepteur qui est relié au modem qui est relié à l'unité d'évaluation.

10. Procédé pour faire fonctionner une installation comprenant un rail, une unité fixe, des parties mobiles guidées sur rail et un guide d'ondes creux à fente,
**caractérisé en ce que**
soit une première des parties mobiles, soit l'unité fixe, fonctionne comme émetteur,
une deuxième des parties mobiles fonctionnant comme récepteur,
l'émetteur commençant, à l'instant t0, à émettre simultanément un signal électromagnétique et un signal acoustique,
le récepteur déterminant l'instant t1 d'arrivée du signal électromagnétique SE et déterminant l'instant t2 d'arrivée du signal acoustique SA,
la distance entre l'émetteur et le récepteur étant déterminée en particulier au moyen d'une unité d'évaluation de la deuxième partie mobile.

11. Procédé selon l'une des revendications précédentes,
**caractérisé en ce que**
la distance déterminée est régulée sur une valeur de consigne prédéfinie de distance en réglant de manière correspondante la vitesse de la partie mobile, la valeur de consigne étant proportionnelle au carré de la moyenne glissante de la vitesse détectée ou proportionnelle à la valeur filtrée passe-bas de la vitesse détectée.
